# EUROPEAN PATENT SPECIFICATION

(11) **EP 0 971 566 B1**
(45) Date of publication and mention of the grant of the patent: **03.03.2004**
(21) Application number: 99113568.2
(22) Date of filing: 07.07.1999
(51) Int. Cl.: H05B 37/02, H05B 37/03

(54) **Adapter device for connecion of electric loads to a controlled current circuit**
Adaptereinrichtung zur Verbindung von Lasten mit einer geregelten Stromquelle
Dispositif d'adaptation pour la connexion des charges à une source de alimentation commandée en courant

(30) Priority: 08.07.1998 IT BO980422
(43) Date of publication of application: 12.01.2000
(73) Proprietor: O.C.E.M. S.P.A., 40016 S. Giorgio di Piano (IT)
(72) Inventor: Basile, Gianluigi, 40050 Argelato (Bologna) (IT)
(74) Representative: Dall'Olio, Giancarlo

(56) References cited:
- EP-A- 0 430 836
- EP-A- 0 445 773
- EP-A- 0 582 287
- WO-A-91/04647
- DE-A- 3 635 682

## Description

The present invention relates to adapter devices for connection of a electrical loads to any type of controlled electric current circuit.

It is known that, in medium-high power lighting systems, the loads (lamps) are preferably connected in series, in such a way as to form a so-called load mesh.

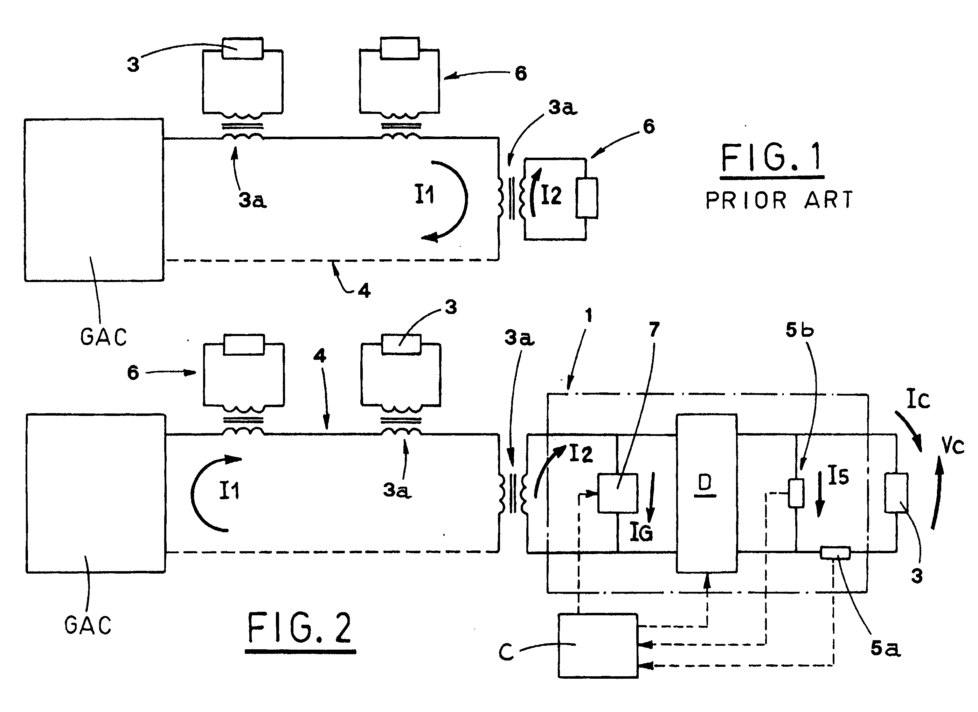

The electric loads can be also connected in series by means of coupling transformers having their primary winding connected in series to form a supply load loop (Figure 1).

This allows a supplying source, of which the values are known, to feed the supply loop with a current which is controlled to have a desired entity, in relation to the number of loads.

However, each load can require a different level of power, due to the cycles of connection-disconnection and in relation to its operational condition.

These combined variations of the voltage and current supply, and consequently of power, can bring about operation problems to some types of loads.

From the WO-A-9104647 a field lighting installation is known which includes a plurality of series connected light fittings, supplied from A.C. mains via a converter unit, which is adapted ot convert the substantially constant voltage obtained from the mains to a substantially constant current in departing lines containing the light fittings. A current controlled regulating unit is associated with each light fitting or group of fittings for regulating the current through the associated lamp or lamps.

However, the output voltage is not regulated and the supply mesh is operated by means of a Boucherot circuit, to create a current generator and control the current by means of thyristors and triacs. The Boucherot circuit is a series resonance circuit formed by an inductance and a capacitor and tuned to the mains frequency, so that when a lamp brakes down, the voltage could rise to very high values.
Thus the installation is dangerous in operation and must be provided with protective means, which increase the cost of the apparatus.
The circuit cannot be mounted on already existing installations because it requires a Boucherot circuit in the supply mesh, which would means to change or modify all the installation, adding additional protection devices and so on, which is not always possible and is rather expensive.
Single load circuits of already existing installations cannot be modified keeping the other ones unchanged.
No modification of the current frequency is performed and the voltage across the load is not controlled.

The main object of the present invention is to propose an adapter device for connecting an electrical load to a controlled current circuit, which allows to maintain constant the tension or the power across the same load, while the current in the circuit varies.

Another object of the present invention is to propose an adapter device which allows to modulate both amplitude and frequency of the current running across the same load.

A further object of the present invention is to propose an adapter device realized by a simple and cheap technical solution of high functionality and reliability standards, which can be used in already existing and/or obsolete facilities.

The above mentioned objects are obtained in accordance with the contents of the claims.

The characteristic features of the invention will become clear from the following description of a preferred embodiment, with reference to the enclosed drawings, in which:
- Figure 1 shows one of the circuit diagrams applied in the prior art, used e.g. for lighting systems or for supplying constant voltage to remote loads;
- Figure 2 shows a circuit diagram of the proposed device.

With reference to the above mentioned figures, the reference symbol GAC indicates an AC generator, for instance a monophase generator, although, any other type of generator could be used. The generator is connected to a supply loop 4 which supplies a series of electrical loads 3. A supply current I1 flows in the supply loop.

The loads are connected to the supply loop 4 by coupling transformers 3a having their primary coils connected in series along the same supply loop 4.

The secondary coils of the coupling transformers 3a are directly connected to the loads 3, so that related load loops 6 are defined, and a main current I2 flows in each load loop (Fig. 1). The reference numeral 1 indicates an adapter circuit that is connected to the supply loop 4 by the secondary coil of a coupling transformer 3a. The output terminals of the adapter device 1 are directly connected across a load 3 (see Fig. 2).

A first detector 5b is also connected across the load 3 and a current I5 flows therethrough. The first detector 5b is connected to a control unit C, that operates the adapter device 1 in accordance to the voltage signals coming from the first detector 5b.

A second detector 5a is connected in series with the load 3 and, therefore, the load current IC flowing through the load is the same current flowing through the second detector 5a. Also the second detector 5a is connected to the control unit C, so that the adapter device 1 can be operated in accordance to the current which flows through the load 3. ,

In this way, the adapter device 1 can be operated by the control unit C as a consequence of combined signals coming from the first and second detector means 5b,5a.

Basically, the adapter device 1 comprises an operating group 7 and a semiconductor conversion group D. The operating group 7 is connected across the input terminals of the device and a derived current IG flows therethrough.

The semiconductor conversion group D, is placed across the same operating group 7 and has the task of processing the sinusoidal input wave so as to generate a variable direct current output signal, in accordance with predetermined modes (for instance, by means of a controlled or semi-controlled diode bridge, simple or double). This happens in accordance with the signals coming from the control unit C.

The effective value of the derived current IG is adjusted by the control unit C, that controls the operating group 7, by the related control terminal, in accordance with the effective value of the current I2 that flows in the corresponding load loop 6.

Therefore, the load 3 connected to the output terminals of the adapter device 1 is crossed by a load current IC and has a load voltage VC across it which both depend on the supply current I1. The ratio between the supply current I1 and the main current I2 depends on the turns ratio of the related coupling transformer 3a, on the derived current IG imposed by the operating group 7, and, in minor proportion, on the detection current I5.

A feed-back is established between the supply loop 4 and the load loop 6 concerned, since the derived current IG can be adjusted by the operating group 7 in accordance to the signals coming from the control unit C.

This has the aim of keeping at constant values the effective load voltage VC, the effective load current IC and the relate thermal effects deriving therefrom.

The operating group 7 is capable of adjusting the derived current IG in accordance with operating cycles defined by an operation frequency F, that is variable within a wide range.

for instance, if the supply current I1 value oscillates because of the connection or disconnection of a plurality of loads 3 to the supply loop 4, these oscillations affect, through the coupling transformer 3a, also the main current I2 in the load loop 6, where the adapter device 1 is mounted.

However, these supply current I1 oscillations have no effects on the load 3 concerned, which is always subjected to the desired effective values of current IC and voltage VC, due to the feed-back action made by the operating group 7 to the load loop 6.

In fact, the operating group 7, as a consequence of the signals coming from the control unit C, operates in accordance to operating cycles having an operation frequency F such that the derived current IG is suitably so modulated that the oscillations of the main current I2 are suitably damped.

For instance, if these supply current I1 oscillations provoked an increase of the main current I2 effective value, the control unit C would command for the operating group 7 operating cycles with the desired operation frequency F, with the aim of increasing the derived current IG, so that the across-the-load current IC and the across-the-load voltage VC would be stabilized.

In the same way, if the oscillations in the supply current I1 provoked a decrease of the effective value of the main current I2, the control unit C would command for the operating group 7 operating cycles with the desired operation frequency F, with the aim of decreasing the derived current IG and consequently the across-the-load current IC and the across-the-load voltage VC.

The above mentioned stabilizing operations performed by the operating group 7 of the adapter device 1, through the intermediate action of the control unit C, take place according to operating cycles having a predetermined operation frequency F which is properly chosen in accordance with the characteristics of the load 3.

To sum up, the adapter device described heretofore is capable of stabilizing, with a strict variation range, the effective value of the current IC and/or voltage VC across an electrical load 3

This happens no matter of the oscillations affecting the supply current I1 that flows through the load loop 4 to which the load 3 concerned is connected, by a relating coupling transformer 3a.

As an example, the operating group 7 may include semiconductor components having three terminals, usually used in the industrial electronics, such as "GTO", "BJT", and "IGBT".

It should also be noted that the components of the adapter device 1 are very few and simple. This is a substantial advantage as far as construction costs are concerned, which are consequently very low.

## Claims

1. Adapter device for insertion of an electrical load in a controlled current circuit, with this load connected to a power supply loop, through which a supply current flows, by means of a coupling transformer (3a), whose primary coil is connected in series in the above mentioned supply loop and whose secondary coil, through which a main current flows, is connected to the said load, with a conversion group (D) acting on the current flowing through each load (3) and an operating group (7) connected in parallel across the secondary coil of the said coupling transformer (3a), said operating group (7) having a derived current (IG) flowing therethrough, and with a control unit (C) which controls the said adapter device; said device being **characterised in that**:
the conversion group (D) is connected in parallel across the input terminals of the adapter device dowstream of said operating group (7);
a first detector (5b) is connected across said load (3) and downstream of said conversion group (D) so that a derived current (I5) flows through the first detector, said first detector (5b) issuing a signal which is proportional to the load voltage (VC) existing across the load (3) and sent to said control unit;
the control unit (C) controls said operating group (7), through a control terminal and in accordance with predetermined operating cycles, so that the derived current (IG) through the operating group is adjusted;
the control unit operates the conversion group (D) so as to convert an input waveform, so that, in co-operation with the variation of the current determined by the operating group (7), the load voltage (VC) applied to said load 3 is maintained constant.

2. Adapter device as in claim 1, **characterised in that** it includes at least a second detector (5a), connected in series with the said electrical load (3) and crossed by a load current (IC), said second detector being capable of issuing a signal proportional to said load current (IC), which signal is sent to said control unit (C).

3. Adapter device as in claim 1, **characterised in that** the above mentioned operating cycles for said operating group (7) have an operation frequency (F) which can be adjusted by the said control unit (C).

4. Adapter device as in claim 1 or 2, **characterised in that** the said operating group (7) include a three-terminal semiconductor component known as "IGBT".

5. Adapter device as in claim 1 or 2, **characterised in that** the said operating group (7) include a three-terminal semiconductor component known as "BJT".

6. Adapter device as in claim 1 or 2, **characterised in that** the said operating group (7) include a three-terminal semiconductor component known as "GTO".

7. Adapter device as in claim 3, **characterised in that** the said conversion group (D) includes semiconductor components.

8. Adapter device as in claim 7, **characterised in that** the said semiconductor components are controlled semiconductor components.

9. Adapter device as in claim 7, **characterised in that** the said semiconductor components are half-controlled semiconductor components.

## Patentansprüche

1. Adaptereinrichtung zum Anschluß einer elektrischen Last an eine geregelte Stromquelle, wobei die elektrische Last mit einer Versorgungseinrichtung verbunden ist, durch welche ein Versorgungsstrom fließt, unter Verwendung eines Kopplungstransformators (3a), dessen Primärspule in Serie mit der vorstehend erwähnten Versorgungseinrichtung geschaltet ist und dessen Sekundärspule, durch welche ein Hauptstrom fließt, an die Last angeschlossen ist, und wobei eine Umformergruppe (D) auf den Strom einwirkt, der durch jede Last (3) fließt und wobei eine Steuergruppe (7) parallel zur Sekundärspule des Kopplungstransformators (3a) geschaltet ist und wobei die Steuergruppe (7) mit einem abgezweigten Strom (IG) versehen ist, der durch diese hindurchfließt und wobei eine Steuereinheit (C) die Adaptereinrichtung steuert, die Einrichtung ist **dadurch gekennzeichnet, daß**:
die Umformergruppe (D) ist parallel zu Eingangsanschlüssen der Adaptereinrichtung hinter der Steuergruppe (7) geschaltet;
ein erster Detektor (Sb) ist mit der Last (3) verbunden und hinter der Umformergruppe (D) angeordnet, so daß ein abgeleiteter Strom (I5)durch den ersten Detektor strömt und daß der erste Detektor (5b) ein Signal bereitstellt, welches proportional zur Lastspannung (VC) ist, die über der Last (3) anliegt und die zur Steuereinrichtung übermittelt wird;
die Steuereinrichtung (C) steuert die Steuergruppe (7) unter Verwendung eines Steueranschlusses und in Übereinstimmung mit einem vorgegebenen Steuertakt, so daß der abgeleitete Strom (IG) durch die Steuergruppe eingestellt wird;
die Steuereinrichtung steuert die Umformergruppe (D) derart, daß eine Eingangswellenform umgeformt wird, so daß in Übereinstimmung mit dem verlauf des von der Steuergruppe (7) ermittelten Stromes die Lastspannung (VC), die die Last (3) beaufschlagt, konstant gehalten wird.

2. Adaptereinrichtung nach Anspruch 1, **dadurch gekennzeichnet, daß** diese mindestens einen zweiten Detektor (5a) umfaßt, der in Serie mit der elektrischen Last (3) geschaltet ist und von einem Laststrom (IC) durchflossen wird, wobei der zweite Detektor dafür geeignet ist, ein Signal zu generieren, das proportional zum Laststrom (IC) ist, und wobei das Signal zur Steuereinrichtung (C) übermittelt wird.

3. Adaptereinrichtung nach Anspruch 1, **dadurch gekennzeichnet, daß** der vorstehend beschriebene Steuertakt für die Steuergruppe (7) eine Steuerfrequenz (F) aufweist, welche von der Steuereinheit (C) vorgebbar ist.

4. Adaptereinrichtung nach Anspruch 1 oder 2, **dadurch gekennzeichnet, daß** die Steuergruppe (7) eine mit drei Anschlüssen versehene Halbleiterkomponente aufweist, die als "IGBT" bezeichnet wird.

5. Adaptereinrichtung nach Anspruch 1 oder 2, **dadurch gekennzeichnet, daß** die Steuergruppe (7) eine mit drei Anschlüssen versehene Halbleiterkomponente aufweist, die als "BJT" bezeichnet wird.

6. Adaptereinrichtung nach Anspruch 1 oder 2, **dadurch gekennzeichnet, daß** die Steuergruppe (7) eine mit drei Anschlüssen versehene Halbleiterkomponente aufweist, die als "GTO" bezeichnet wird.

7. Adaptereinrichtung nach Anspruch 3, **dadurch gekennzeichnet, daß** die Umwandlungsgruppe (D) Halbleiterkomponenten umfaßt.

8. Adaptereinrichtung nach Anspruch 7, **dadurch gekennzeichnet, daß** die Halbleiterkomponenten von Halbleiterkomponenten gesteuert sind.

9. Adaptereinrichtung nach Anspruch 7, **dadurch gekennzeichnet, daß** die Halbleiterkomponenten halbgesteuerte Halbleiterkomponenten sind.

## Revendications

1. Dispositif d'adaptation pour l'insertion d'une charge électrique dans un circuit à courant commandé, cette charge étant connectée à une boucle d'alimentation en énergie, à travers laquelle circule une alimentation en courant, au moyen d'un transformateur de couplage (3a), dont l'enroulement primaire est connecté en série dans la boucle d'alimentation mentionnée ci-dessus et dont l'enroulement secondaire, à travers lequel circule un courant principal, est connecté à ladite charge, un groupe de conversion (D) agissant sur le courant circulant à travers chaque charge (3) et un groupe de fonctionnement (7) étant connecté en parallèle aux bornes de l'enroulement secondaire dudit transformateur de liaison (3a), ledit groupe de fonctionnement (7) ayant un courant dérivé (IG) circulant à travers celui-ci, et une unité de commande (C) commandant ledit dispositif d'adaptation ; ledit dispositif d'adaptation étant **caractérisé en ce que** :
le groupe de conversion (D) est connecté en parallèle aux bornes d'entrée du dispositif d'adaptation en aval dudit groupe de fonctionnement (7) ;
un premier détecteur (5b) est connecté aux bornes de ladite charge (3) et en aval dudit groupe de conversion (D) de sorte qu'un courant dérivé (I5) circule à travers le premier détecteur, ledit premier détecteur (5b) délivrant un signal qui est proportionnel à la tension de charge (VC) existant aux bornes de la charge (3) et envoyé à ladite unité de commande ;
l'unité de commande (C) commande ledit groupe de fonctionnement (7), par l'intermédiaire d'une borne de commande et en fonction de cycles de fonctionnement prédéterminés, de sorte que le courant dérivé (IG) à travers le groupe de fonctionnement soit ajusté ;
l'unité de commande actionne le groupe de conversion (D) afin de convertir une forme d'onde d'entrée, de sorte que, en coopération avec la variation du courant déterminée par le groupe de fonctionnement (7), la tension de charge (VC) appliquée à ladite charge (3) est maintenue constante.

2. Dispositif d'adaptation selon la revendication 1, **caractérisé en ce qu'**il comprend au moins un second détecteur (5a), connecté en série avec ladite charge électrique (3) et traversé par un courant de charge (IC), ledit second détecteur étant capable de délivrer un signal proportionnel audit courant de charge (IC), lequel signal est envoyé à ladite unité de commande (C).

3. Dispositif d'adaptation selon la revendication 1, **caractérisé en ce que** les cycles de fonctionnement mentionnés ci-dessus pour ledit groupe de fonctionnement (7) ont une fréquence de fonctionnement (F) qui peut être réglée par ladite unité de commande (C).

4. Dispositif d'adaptation selon la revendication 1 ou 2, **caractérisé en ce que** ledit groupe de fonctionnement (7) comprend un composant semiconducteur à trois bornes connu sous le nom de « IGBT ».

5. Dispositif d'adaptation selon la revendication 1 ou 2, **caractérisé en ce que** ledit groupe de fonctionnement (7) comprend un composant semiconducteur à trois bornes connu sous le nom de « BJT ».

6. Dispositif d'adaptation selon la revendication 1 ou 2, **caractérisé en ce que** ledit groupe de fonctionnement (7) comprend un composant semiconducteur à trois bornes connu sous le nom de « GTO ».

7. Dispositif d'adaptation selon la revendication 3, **caractérisé en ce que** ledit groupe de conversion (D) comprend des composants semiconducteurs.

8. Dispositif d'adaptation selon la revendication 7, **caractérisé en ce que** lesdits composants semiconducteurs sont des composants semiconducteurs commandés.

9. Dispositif d'adaptation selon la revendication 7, **caractérisé en ce que** lesdits composants semiconducteurs sont des composants semiconducteurs commandés à moitié.
